# EUROPEAN PATENT APPLICATION

(11) **EP 4 574 538 A1**
(43) Date of publication of application: **25.06.2025**
(21) Application number: 24214344.4
(22) Date of filing: 20.11.2024
(51) Int. Cl.: B60L 53/10, B60L 53/14, B60L 53/66, B60L 3/00, B60L 53/62

(54) **VEHICLE**

(30) Priority: 29.11.2023 JP 2023201365
(71) Applicant: TOYOTA JIDOSHA KABUSHIKI KAISHA, Toyota-Shi, Aichi-Ken 471-8571 (JP)
(72) Inventor: KIDA, Masatoshi, Toyota-Shi, Aichi-Ken 471-8571 (JP)
(74) Representative: Cabinet Beau de Loménie

(57) **Abstract**

An ECU performs a process including the step (S102) of calculating a required current value when external charging is to be performed (YES in S100), the step (S108) of activating a device in a vehicle when a minimum output current is obtained (YES in S104) and when the required current value is lower than the minimum output current (YES in S106), the step (S112) of transmitting a sum of the required current value and a device current value when the sum of the required current value and the device current value is greater than or equal to the minimum output current, and the step (S118) of stopping external charging when charging is complete (YES in S116).

## Description

### CROSS REFERENCE TO RELATED APPLICATIONS

This nonprovisional application is based on Japanese Patent Application No. 2023-201365 filed on November 29, 2023 with the Japan Patent Office, the entire contents of which are hereby incorporated by reference.

### BACKGROUND

### Field

The present disclosure relates to vehicles.

### Description of the Background Art

A known technique controls power supply according to whether a device of a vehicle is operated in external charging of charging a vehicle-mounted power storage device using an external power supply facility. For example, Japanese Patent Laying-Open No. 2022-063666 discloses a technique of controlling power supply according to whether an air conditioner is operated.

### SUMMARY

In external charging as described above, especially during quick charging, electric power supplied to the vehicle from the power supply facility may have a large lower limit. If the electric power required by the vehicle to charge the vehicle-mounted power storage device is less than the lower limit of the electric power supplied from the power supply facility, thus, the vehicle-mounted power storage device may not be charged with high accuracy.

An object of the present disclosure is to provide a vehicle that charges a vehicle-mounted power storage device with high accuracy in quick charging using an external power supply facility.

A vehicle according to an aspect of the present disclosure includes a power storage device charged with electric power supplied from a power supply external to the vehicle, a controller that determines a required current value indicating a required value of a current supplied to the power storage device, and a device that consumes the electric power supplied to the power storage device. When a sum of the required current value and a device current value supplied to the device is less than a threshold, the controller increases power consumption in the device.

Thus, the device current value can be increased by increasing the power consumption in the device when the sum of the required current value and the device current value is less than the threshold. This can prevent a current from flowing into the power storage device in excess of the required current value when a current supplied from the external power supply is large. This enables high-accuracy charging of the power storage device.

In an embodiment, the threshold is a lower limit of a current output from the power supply external to the vehicle.

Thus, the device current value can be increased by increasing the power consumption in the device when the sum of the required current value and the device current value is less than the lower limit of the current output from the power supply external to the vehicle. This can prevent a current from flowing into the power storage device in excess of the required current value, enabling high-accuracy charging of the power storage device.

In another embodiment, the threshold is an actually measured value of a lower limit of a current output from the power supply external to the vehicle.

Thus, the device current value can be increased by increasing the power consumption in the device when the sum of the required current value and the device current value is less than the actually measured value of the lower limit of the current output from the power supply external to the vehicle. This can prevent a current from flowing into the power storage device in excess of the required current value, enabling high-accuracy charging of the power storage device.

In still another embodiment, when the sum of the required current value and the device current value is less than the threshold, the controller increases the power consumption such that the sum of the required current value and the device current value is greater than or equal to the threshold.

Thus, the device current value can be increased by increasing the power consumption in the device when the sum of the required current value and the device current value is less than the lower limit of the current supplied from the external power supply. This can prevent a current from flowing in excess of the required current value when a current supplied from the external power supply is large, enabling high-accuracy charging of the power storage device.

In still another embodiment, the vehicle further includes a notification device that notifies a user of predetermined information. When the sum of the required current value and the device current value is less than the threshold, the controller uses the notification device to notify the user that an operation of the device is to be started.

Thus, the user can be notified that an operation of the device is to be started, thus enabling start of the operation of the device without causing any discomfort to the user.

In still another embodiment, the vehicle further includes a notification device that notifies a user of predetermined information. When the sum of the required current value and the device current value is less than the threshold, the controller uses the notification device to notify the user that the power consumption is to be increased.

Thus, the user can be notified that the power consumption of the device is to be increased, thus increasing power consumption without causing any discomfort to the user.

In still another embodiment, the vehicle further includes an input device that accepts an operation from a user. The controller starts an operation of the device when the sum of the required current value and the device current value is less than the threshold and when a fist operation, which indicates that starting the operation of the device is permitted, has been accepted in the input device. The controller brings the device to a halt when the sum of the required current value and the device current value is less than the threshold and when a second operation, which indicates that starting the operation of the device is not permitted, has been accepted in the input device.

Thus, whether to start an operation of the device can be determined according to the user's intention.

In still another embodiment, the vehicle further includes an input device that accepts an operation from a user. The controller increases the power consumption when the sum of the required current value and the device current value is less than the threshold and when a first operation, which indicates that an increase in the power consumption is permitted, has been accepted in the input device. The controller maintains or reduces the power consumption when the sum of the required current value and the device current value is less than the threshold and when a second operation, which indicates that an increase in the power consumption is not permitted, has been accepted in the input device.

Thus, whether to increase the power consumption of the device can be determined according to the user's intention.

In still another embodiment, when the sum of the required current value and the device current value is less than the threshold after increasing the power consumption, the controller stops supply of the electric power from the power supply external to the vehicle before the power storage device is fully charged.

Thus, supply of the electric power from the external power supply can be stopped before the power storage device is fully charged, thus suppressing an increase in the load of the power storage device to protect the power storage device.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows an example configuration of a charging system.
Fig. 2 is a flowchart showing an example process performed by an ECU.
Fig. 3 is a diagram for illustrating the relationship between a required current value and a minimum output current.
Fig. 4 is a first flowchart showing an example process performed by the ECU in a modification.
Fig. 5 is a second flowchart showing an example process performed by the ECU in a modification.
Fig. 6 is a third flowchart showing an example process performed by the ECU in a modification.
Fig. 7 is a fourth flowchart showing an example process performed by the ECU in a modification.
Fig. 8 is a fifth flowchart showing an example process performed by the ECU in a modification.

### DESCRIPTION OF THE PREFERRED EMBODIMENTS

Embodiments of the present disclosure will be described below in detail with reference to the drawings. The same or corresponding portions in the drawings are denoted by the same reference characters, and description thereof will not be repeated.

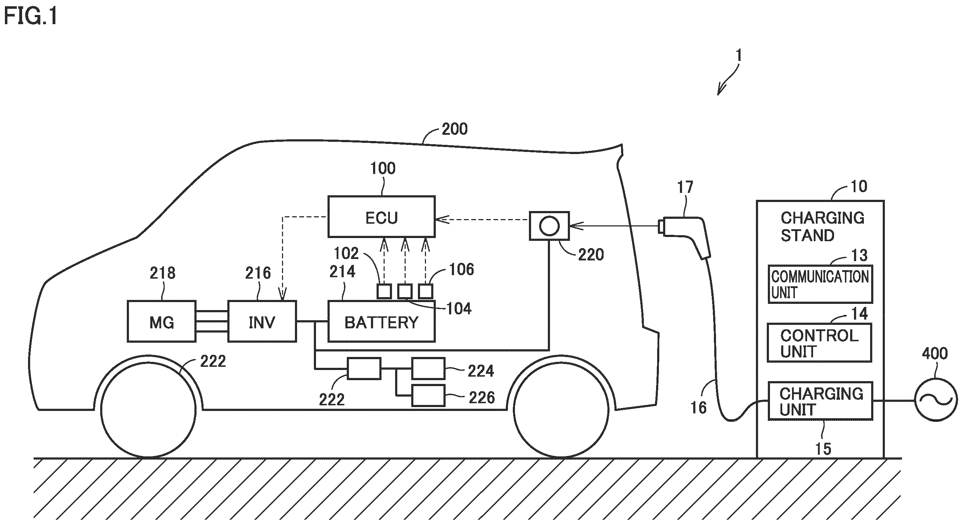

An example configuration of a charging system 1 in the present embodiment will be described below. Fig. 1 shows an example configuration of charging system 1. As shown in Fig. 1, charging system 1 includes a vehicle 200 and a charging stand 10, which is a power supply facility external to vehicle 200. Vehicle 200 may be any vehicle with a power storage device capable of charging with electric power supplied from an external power supply, and for example, it may be a battery electric vehicle or a plug-in hybrid electric vehicle.

Vehicle 200 includes an electronic control unit (ECU) 100, which is a controller, a battery 214, an inverter 216, a motor generator (MG) 218, an inlet 220, a direct-current (DC)/DC converter 222, an air conditioning heater 224, and a seat heater 226.

Battery 214 can be any rechargeable power storage device and includes, for example, a secondary battery such as a nickel metal hydride battery or a lithium ion battery containing a liquid or solid electrolyte. A capacitor may be used in place of battery 214 as the power storage device.

Inverter 216 is configured to bidirectionally convert DC power of battery 214 and alternate-current (AC) power of MG 218 in response to a control signal from ECU 100.

MG 218 is a drive source that drives drive wheels of vehicle 200, and is configured of, for example, a three-phase AC rotating electric machine.

Inlet 220 is shaped to allow connector 17 of charging stand 10 to be attached thereto. Inlet 220 is electrically connected to battery 214.

DC/DC converter 222 converts the DC power between the voltage of battery 214 and the auxiliary battery (not shown) or an auxiliary device including air conditioning heater 224 and seat heater 226. Specifically, DC/DC converter 222 steps down DC power from battery 214 and outputs the DC power to at least any of the auxiliary battery, air conditioning heater 224, and seat heater 226. Air conditioning heater 224 operates when air conditioning heater 224 is in a conductive state. Air conditioning heater 224 is, for example, in the conductive state during use of heating, and heats the air in the vehicle compartment. Seat heater 226 operates when seat heater 226 is in the conductive state. Seat heater 226 heats, for example, the driver's and front passenger's seats.

DC/DC converter 222, air conditioning heater 224, and seat heater 226 all operate in response to a control signal from ECU 100.

ECU 100 is connected with sensors 102, 104, 106 for obtaining the voltage, current, and temperature of battery 214. ECU 100 includes a central processing unit (CPU) and a memory, none of which is shown. ECU 100 controls devices (including DC/DC converter 222, air conditioning heater 224, and seat heater 226) to bring vehicle 200 into a desired state based on the signals received from the respective sensors, and information such as maps and programs stored in the memory.

ECU 100 has a function of sequentially calculating the state of charge (SOC) of battery 214 based on the respective detected values of sensors 102, 104, 106. The SOC can be calculated by various known methods such as a method based on current value addition (coulomb counting) or a method based on estimation of an open circuit voltage (OCV). ECU 100 is configured to communicate with a communication unit 13 of a charging stand 10, which will be described below.

Charging stand 10 includes communication unit 13, a control unit 14, a charging unit 15, a cable 16, and a connector 17. Charging stand 10 includes, for example, a quick charger that completes charging in a shorter period of time than normal charging by supplying charging power higher than that of normal charging.

Communication unit 13 performs wired communication with ECU 100 of vehicle 200 via cable 16 when connector 17 is connected to inlet 220 of vehicle 200. Examples of wired communication include power line communication, control area network (CAN) communication, or LAN communication. Communication unit 13 may, for example, communicate with ECU 100 of vehicle 200 by wireless communication of various standards (e.g., WiFi).

Control unit 14 controls operations (e.g., charging voltage and charging current) of charging unit 15. Control unit 14 includes, for example, a CPU and a memory, none of which is shown. Control unit 14 controls charging unit 15 based on information (e.g., the required current value described below) received from vehicle 200 using communication unit 13 and information such as maps and programs stored in the memory. When connector 17 is attached to inlet 220, control unit 14 uses communication unit 13 to obtain information (e.g., information about the SOC, charging voltage, and required current value) about battery 214 and transmit information (e.g., information about the available time, the charging power that can be supplied, and the lower limit of the output current) about charging stand 10.

Charging unit 15 converts AC power from a grid power supply 400 into DC power in response to a control signal from control unit 14. One end of cable 16 is connected to charging unit 15. Connector 17 is connected to the other end of cable 16.

Connector 17 is shaped to be attachable to inlet 220. When connector 17 is attached to inlet 220, DC power can be supplied to battery 214 from charging unit 15 in response to a control signal from control unit 14.

For example, when connector 17 is connected to inlet 220 of stopped vehicle 200, charging stand 10 operates charging unit 15 to convert AC power from grid power supply 400 into DC power and supplies the converted DC power to battery 214. During charging of battery 214, ECU 100 transmits, to control unit 14, the information about the SOC and the required current value calculated using the respective detected values of sensors 102, 104, 106. For example, when the SOC is calculated, ECU 100 calculates a required current value corresponding to the calculated SOC, the full charge capacity of battery 214, or the battery temperature of battery 214, and transmits the information about the SOC, the required current value, and the like to control unit 14.

During quick charging using charging stand 10 as described above, the output current (hereinafter referred to as a minimum output current) supplied from charging stand 10 to vehicle 200 may have a large lower limit. Thus, when the required current value required by vehicle 200 to charge battery 214 is below the minimum output current, battery 214 may not be charged with high accuracy.

In the present embodiment, thus, when the sum of the required current value and the current value (hereinafter referred to as a device current value) supplied to the device (specifically, air conditioning heater 224 and seat heater 226) mounted in vehicle 200 is less than a threshold, ECU 100 increases the power consumption in the device. In the present embodiment, the threshold indicates the minimum output current. Further, the device current value may be zero (the device in question is stopped).

As a result, the device current value can be increased by increasing the power consumption in the device when the sum of the required current value and the device current value is less than the minimum output current. Thus, a current can be prevented from flowing to battery 214 in excess of the required current value when the minimum output current is large. As a result, battery 214 can be charged with high accuracy.

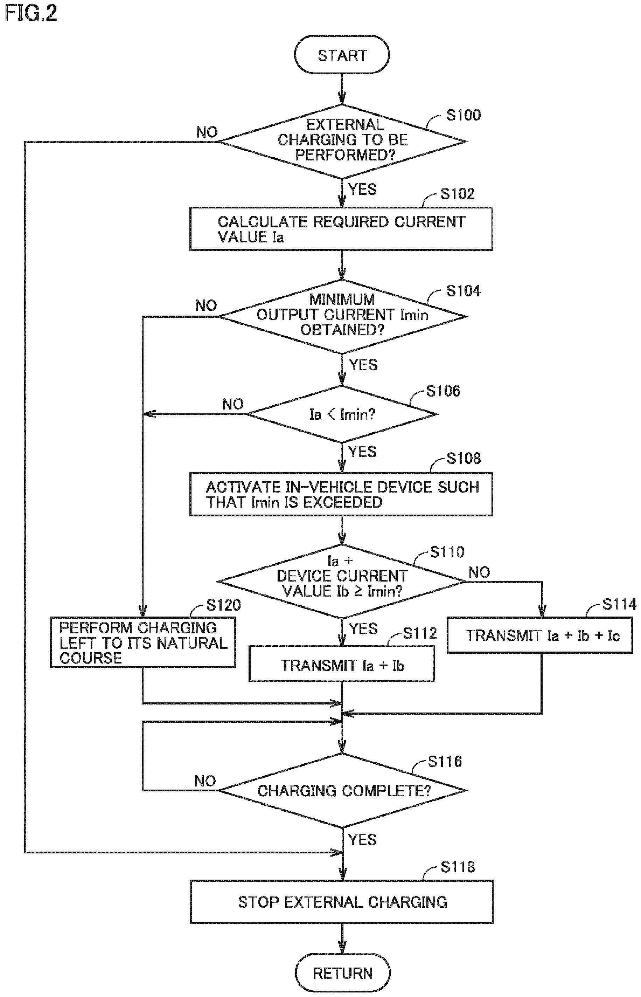

An example process performed in ECU 100 will be described below with reference to Fig. 2. Fig. 2 is a flowchart showing an example process performed in ECU 100. A series of processes shown in this flowchart are repeated at each predetermined cycle.

In step (the step is hereinafter referred to as S) 100, ECU 100 determines whether to perform external charging. ECU 100 determines, for example, that external charging is to be performed when connector 17 is connected to inlet 220. For example, ECU 100 determines that connector 17 is connected to inlet 220 when receiving an ON signal output when connector 17 is attached to inlet 220 from a connection detection circuit (not shown) provided in inlet 220. When ECU 100 determines that external charging is to be performed (YES in S100), the process moves to S102.

In S102, ECU 100 calculates a required current value Ia. ECU 100 calculates required current value Ia based on at least any of, for example, the SOC of battery 214, the full charge capacity of battery 214, and the battery temperature of battery 214. ECU 100 may, for example, calculate required current value Ia from the SOC, the full charge capacity, and the battery temperature using a map, function, or the like that shows the relationship among the SOC, full charge capacity, battery temperature, and required current value Ia. Alternatively, ECU 100 may, for example, calculate a reference value of required current value Ia from the SOC using a map or function that shows the relationship between the SOC and the reference value of required current value Ia, and calculate required current value Ia by correcting the calculated reference value using the full charge capacity and the battery temperature. The process then moves to S104.

In S104, ECU 100 determines whether a minimum output current Imin has been obtained from charging stand 10. ECU 100 determines that minimum output current Imin has been obtained from charging stand 10 when receiving information including minimum output current Imin from charging stand 10. When ECU 100 determines that minimum output current Imin has been obtained from charging stand 10 (YES in S104), the process moves to S106.

In S106, ECU 100 determines whether required current value Ia is less than minimum output current Imin. When ECU 100 determines that required current value Ia is less than minimum output current Imin (YES in S106), the process moves to S108.

In S108, ECU 100 activates an in-vehicle device such that minimum output current Imin is exceeded. Specifically, ECU 100 activates a predetermined device in vehicle 200. In the present embodiment, ECU 100, for example, renders air conditioning heater 224 and seat heater 226 conductive. The process then moves to S110.

In S110, ECU 100 determines whether the sum of required current value Ia and a device current value Ib, which flows to air conditioning heater 224 and seat heater 226 by rendering air conditioning heater 224 and seat heater 226 conductive, is greater than or equal to minimum output current Imin. ECU 100, for example, detects a current flowing to air conditioning heater 224 and seat heater 226 as device current value Ib using a current sensor (not shown) or the like. When ECU 100 determines that the sum of required current value Ia and device current value Ib is greater than or equal to minimum output current Imin (YES in S110), the process moves to S112.

In S112, ECU 100 transmits the sum of required current value Ia and device current value Ib to charging stand 10 as the final required value. Upon receipt of the final required value, control unit 14 of charging stand 10 controls charging unit 15 such that the current of the received required value is output. The process then moves to S116. When ECU 100 determines that the sum of required current value Ia and device current value Ib is less than minimum output current Imin (NO in 5110), the process moves to S114.

In S114, ECU 100 transmits, to charging stand 10, the sum of required current value Ia, device current value Ib, and a current value Ic for activating the device that can be activated other than air conditioning heater 224 and seat heater 226, as the final required value. Examples of the device that can be activated other than air conditioning heater 224 and seat heater 226 include predetermined electrical devices among lighting devices inside and outside the vehicle, audio devices, navigation systems, and other devices. The process then moves to S116.

In S116, ECU 100 determines whether charging is complete. For example, ECU 100 may determine that charging is complete when the SOC of battery 214 has reached a threshold corresponding to a predetermined state of charge (e.g., a state of full charge or a state of charge before becoming fully charged). For example, when the sum of required current value Ia and device current value Ib is greater than or equal to minimum output current Imin, ECU 100 may determine that charging is complete when the SOC has reached the threshold corresponding to the state of full charge. Alternatively, for example, when charging left to its natural course, which will be described later, is performed, ECU 100 may determine that charging is complete when the SOC has reached the threshold corresponding to the state of charge before becoming fully charged. Alternatively, ECU 100 may determine that charging is complete when receiving a request from the user to stop charging. Alternatively, ECU 100 may determine that charging is complete when a predetermined stop condition is satisfied, such as the battery temperature exceeding a threshold. When ECU 100 determines that charging is complete (YES in S116), the process moves to S 118.

In S118, ECU 100 stops charging. For example, ECU 100 stops charging by requiring charging stand 10 to stop charging. The process is then terminated. When ECU 100 determines that minimum output current Imin is not obtained (NO in S104), or when ECU 100 determines that required current value Ia is greater than or equal to minimum output current Imin (NO in S106), the process moves to S120.

In S120, ECU 100 performs charging left to its natural course. Specifically, ECU 100 requires charging stand 10 to perform charging without transmitting a required value, and charges battery 214 with the current supplied from charging stand 10. When performing charging left to its natural course, ECU 100 brings devices not related to charging (e.g., air conditioning heater 224, seat heater 226, and any other device) to a halt. The process then moves to S116. When ECU 100 determines that charging is not to be performed (NO in S100), this process is terminated. When ECU 100 determines that charging is not complete (NO in S116), the process returns to S116.

An example operation of ECU 100 based on the structure and flowchart described above will be described.

For example, when external charging is to be performed by attaching connector 17 to inlet 220 (YES in S100), ECU 100 calculates required current value Ia from the SOC of battery 214 and the like (S102). When communication is performed between charging stand 10 and ECU 100 and minimum output current Imin is obtained from charging stand 10 (YES in S104), ECU 100 determines whether required current value Ia is less than minimum output current Imin (S106). When ECU 100 determines that required current value Ia is less than minimum output current Imin (YES in S106), air conditioning heater 224 and seat heater 226 are rendered conductive (S108).

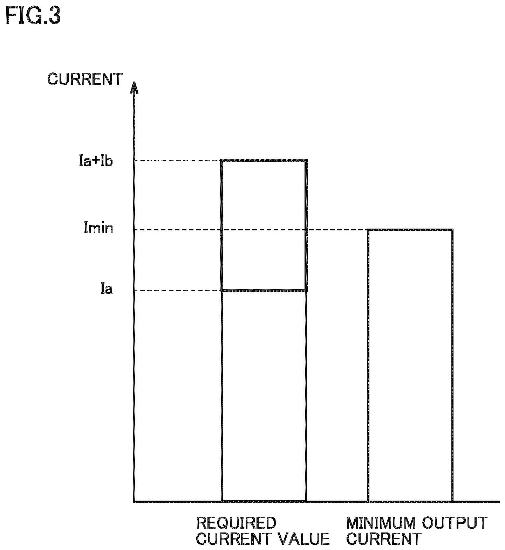

Fig. 3 is a diagram for illustrating the relationship between required current value Ia and minimum output current Imin. Fig. 3 shows an example of required current value and minimum output current in the form of a bar graph. As shown in Fig. 3, even when required current value Ia is less than minimum output current Imin, the sum of required current value Ia and device current value Ib is greater than or equal to minimum output current Imin by rendering air conditioning heater 224 and seat heater 226 conductive to add device current value Ib (bold frame in Fig. 3). When the sum of required current value Ia and device current value Ib is greater than or equal to minimum output current Imin (YES in S110), ECU 100 transmits the sum of required current value Ia and device current value Ib to charging stand 10 as the final required value (S112).

As a result, a current corresponding to the required value is supplied from charging stand 10. At this time, since air conditioning heater 224 and seat heater 226 are rendered conductive, the current corresponding to device current value Ib of the current supplied from charging stand 10 is supplied to air conditioning heater 224 and seat heater 226, and a current corresponding to required current value Ia is used to charge battery 214. Consequently, charging stand 10 supplies a current greater than or equal to minimum output current Imin, and battery 214 is charged at required current value Ia.

Contrastingly, when the sum of required current value Ia and device current value Ib is less than minimum output current Imin (NO in S110), the sum of required current value Ia, device current value Ib, and current value Ic of the device other than air conditioning heater 224 and seat heater 226 is transmitted to charging stand 10 as the final required value (S114). In this case, minimum output current Imin is supplied from charging stand 10.

When minimum output current Imin is not obtained (NO in S104) or when required current value Ia is greater than or equal to minimum output current Imin (NO in S106), charging left to its natural course is performed (S120).

When the SOC of battery 214 becomes the state of full charge or the predetermined stop condition is satisfied, ECU 100 determines that charging is complete (YES in S116), and stops charging (S118).

As described above, in vehicle 200 according to the present embodiment, device current value Ib can be increased by increasing the power consumption in air conditioning heater 224 and seat heater 226 when required current value Ia is less than minimum output current Imin. Thus, a current can be prevented from flowing to battery 214 in excess of the required current value when the minimum output current is large. As a result, battery 214 can be charged with high accuracy. Therefore, a vehicle can be provided that charges a vehicle-mounted power storage device with high accuracy during quick charging using an external power supply facility.

Further, when the sum of required current value Ia and device current value Ib is less than minimum output current Imin, a current can be prevented from flowing in excess of the required current value by, for example, activating any other device in addition to air conditioning heater 224 and seat heater 226 to increase power consumption.

Modifications will be described below.

Although the embodiment above has described that air conditioning heater 224 and seat heater 226 are activated according to the result of comparison between required current value Ia and minimum output current Imin, when, for example, the amounts of activation of air conditioning heater 224 and seat heater 226 can be adjusted, power consumption may be increased by adjusting the amounts of activation of air conditioning heater 224 and seat heater 226 such that required current value Ia and device current value Ib are equal to minimum output current Imin or is greater than minimum output current Imin by a predetermined value.

Further, though the embodiment above has described that air conditioning heater 224 and seat heater 226 are both rendered conductive when required current value Ia is lower than minimum output current Imin, ECU 100 may select any single device alone and render the selected device conductive when, for example, the sum of required current value Ia and device current value Ib of at least one of air conditioning heater 224 and seat heater 226 is greater than or equal to minimum output current Imin. In this case, ECU 100 may select a device to be rendered conductive by presetting the order of priority between air conditioning heater 224 and seat heater 226. When the priority of air conditioning heater 224 is set to be higher than that of seat heater 226, ECU 100 may, for example, render air conditioning heater 224 conductive when required current value Ia is lower than minimum output current Imin, and in that case, further render seat heater 226 conductive when the sum of required current value Ia and device current value Ib is less than minimum output current Imin.

Further, though the embodiment above has described that air conditioning heater 224 and seat heater 226 are activated according to the result of comparison between required current value Ia and minimum output current Imin when minimum output current Imin is received from charging stand 10, ECU 100 may, for example, activate air conditioning heater 224 and seat heater 226 according to the result of comparison between required current value Ia and an actually measured value of minimum output current Imin even when ECU 100 does not receive minimum output current Imin from charging stand 10. ECU 100 may detect an actually measured value of minimum output current Imin using charging history for longer than or equal to a predetermined period. Also by so doing, battery 214 can be charged with high accuracy.

Further, though the embodiment above has described that in the case where minimum output current Imin is obtained, air conditioning heater 224 and seat heater 226 are activated when required current value Ia is less than minimum output current Imin, in the case where minimum output current Imin is not obtained, the device (e.g., air conditioning heater 224 and seat heater 226) mounted in vehicle 200 may be operated such that the sum of required current value Ia and device current value Ib is greater than or equal to a predetermined value. Although the present modification describes the predetermined value as, for example, 10 A, it is not particularly limited to 10 A.

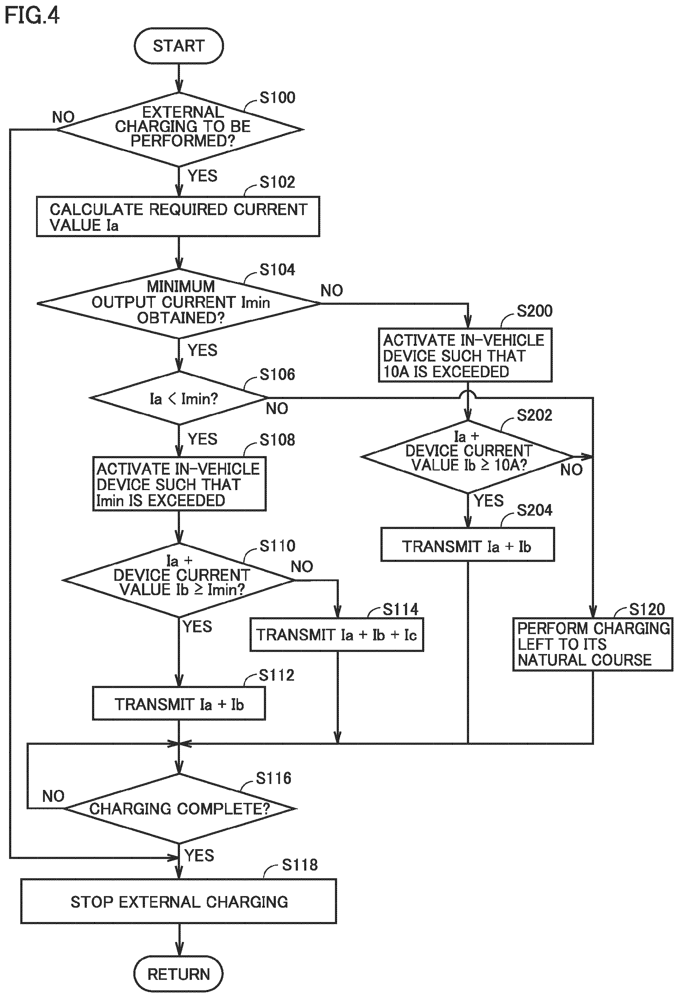

Fig. 4 is a first flowchart showing an example process performed by ECU 100 in the modification. The processes of S100, S102, S104, S106, S108, S110, S112, S114, S116, S118, and S120 of the flowchart shown in Fig. 4 are identical in content to the processes of S100, S102, S104, S106, S108, S110, 112, S114, S116, S118, and S120 of the flowchart shown in Fig. 2, respectively, except for the description below. Thus, detailed description thereof will not be repeated.

When ECU 100 determines that minimum output current Imin is not obtained (NO in S104), the process moves to S200.

In S200, ECU 100 activates the device mounted in vehicle 200 such that the sum of required current value Ia and device current value Ib exceeds 10 A. Specifically, ECU 100 operates only air conditioning heater 224 in the case where device current value Ib when only air conditioning heater 224 is operated is greater than or equal to the value obtained by subtracting required current value Ia from 10 A. In the case where device current value Ib is less than the value obtained by subtracting required current value Ia from 10 A, ECU 100 operates seat heater 226 in addition to air conditioning heater 224. The process then moves to S202.

In S202, ECU 100 determines whether the sum of required current value Ia and device current value Ib is greater than 10 A. When ECU 100 determines that the sum of required current value Ia and device current value Ib is greater than 10 A (YES in S202), the process moves to S204.

In S204, ECU 100 transmits the sum of required current value Ia and device current value Ib to charging stand 10 as the final required value. The process then moves to S116. When ECU 100 determines that the sum of required current value Ia and device current value Ib is less than or equal to 10 A (NO in S202), the process moves to S120.

Thus, for example, when ECU 100 determines that external charging is to be performed by attaching connector 17 to inlet 220 (YES in S100), ECU 100 calculates required current value Ia from the SOC of battery 214 and the like (S102). When minimum output current Imin is not obtained (NO in S104), for example, air conditioning heater 224 and seat heater 226 are rendered conductive such that 10 A is exceeded (S200).

When the sum of required current value Ia and device current value Ib is greater than 10 A (YES in S202), ECU 100 transmits the sum of required current value Ia and device current value Ib to charging stand 10 as the final required value (S204).

As a result, a current corresponding to the required value is supplied from charging stand 10. At this time, since air conditioning heater 224 and seat heater 226 are rendered conductive, a current corresponding to device current value Ib of the current supplied from charging stand 10 is supplied to air conditioning heater 224 and seat heater 226, and a current corresponding to required current value Ia is used to charge battery 214. As a result, battery 214 is charged at required current value Ia even when minimum output current Imin from charging stand 10 is not obtained. Thus, battery 214 can be charged with high accuracy.

Further, though the embodiment has described that when required current value Ia is less than minimum output current Imin, external charging is performed while operating air conditioning heater 224 and seat heater 226, the user may be allowed to set in advance whether to perform external charging.

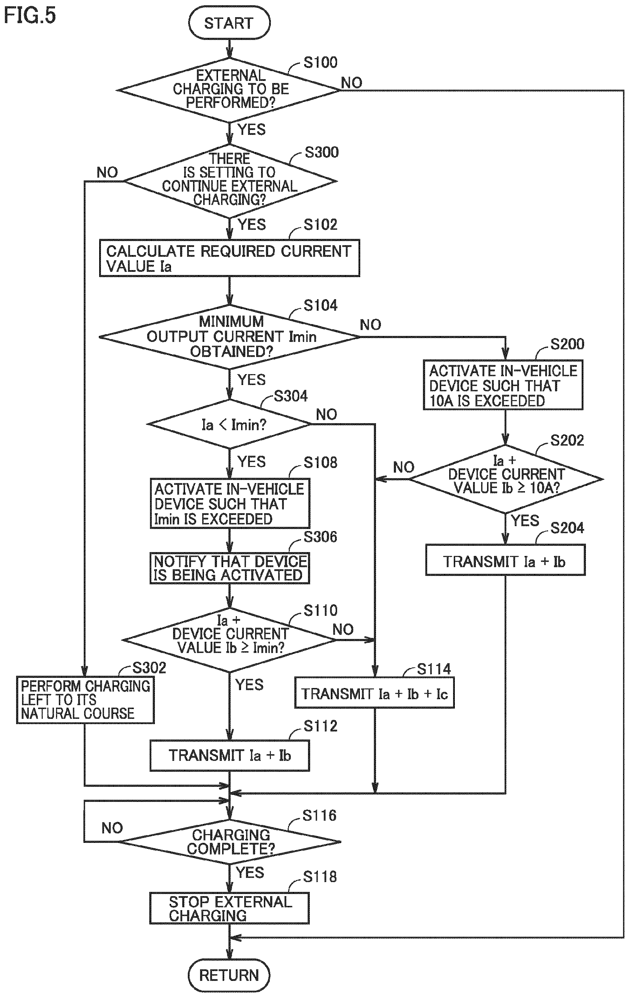

Fig. 5 is a second flowchart showing an example process performed by ECU 100 in a modification. The processes of S100, S102, S104, S108, S110, S112, S114, S116, S118, S200, S202, and S204 of the flowchart shown in Fig. 5 are identical in content to the processes of 100, S102, S104, S108, S110, S112, S114, S116, S118, S200, S202, and S204 of the flowchart shown in Fig. 4, respectively, except for the description below. Thus, detailed description thereof will not be repeated.

When ECU 100 determines that external charging is to be performed (YES in S100), the process moves to S300.

In S300, ECU 100 determines whether there is a setting to continue the execution of external charging. ECU 100 determines that there is a setting to continue the execution of external charging in the case where it is set in advance by the user to continue the execution of external charging by activating air conditioning heater 224 and seat heater 226 even when required current value Ia is less than minimum output current Imin. ECU 100 sets a predetermined flag to the ON state upon receipt of, for example, an operation to set the continuous execution of external charging in an input device provided in vehicle 200. ECU 100 determines that there is a setting to continue the execution of external charging when a predetermined flag is in the ON state. When ECU 100 determines that there is a setting to continue the execution of external charging (YES in S300), the process moves to S102. When ECU 100 determines that there is no setting to continue the execution of external charging (NO in S300), the process moves to S302.

In S302, ECU 100 performs charging left to its natural course. Since the process of charging left to its natural course is identical to the process in S120 of the flowchart shown in Fig. 2, detailed description thereof will not be repeated. The process then moves to S116. When minimum output current Imin is obtained in S104 (YES in S104), the process moves to S304.

In S304, ECU 100 determines whether required current value Ia is less than minimum output current Imin. When ECU 100 determines that required current value Ia is less than minimum output current Imin (YES in S304), the process moves to S108. When ECU 100 determines that required current value Ia is greater than or equal to minimum output current Imin (NO in S304), the process moves to 5114. Further, the process moves to S306 after the process of S108.

In S306, ECU 100 notifies the user that the device mounted in vehicle 200 is being activated. ECU 100, for example, displays an image or textual information indicating that the device (specifically, air conditioning heater 224 and seat heater 226) in the vehicle is being operated on a display device provided in the compartment of vehicle 200, thereby notifying the user that the device mounted in vehicle 200 is being activated. The process then moves to S110.

Thus, for example, when ECU 100 determines that external charging is to be performed by attaching connector 17 to inlet 220 (YES in S100), ECU 100 determines whether there is a setting to continue execution of external charging even by operating air conditioning heater 224 and seat heater 226 (S300). When ECU 100 determines that there is a setting to continue the execution of external charging (YES in S300), ECU 100 calculates required current value Ia from the SOC of battery 214 and the like (S102). When minimum output current Imin is obtained (YES in S104) and when ECU 100 determines that required current value Ia is less than minimum output current Imin (YES in S304), ECU 100 renders air conditioning heater 224 and seat heater 226 conductive (S108).

Subsequently, ECU 100 notifies that conditioning heater 224 and seat heater 226 are being activated (S306). When the sum of required current value Ia and device current value Ib is greater than or equal to minimum output current Imin (YES in S110), ECU 100 transmits the sum of required current value Ia and device current value Ib to charging stand 10 as the final required value (S112). As a result, a current corresponding to the required value is supplied from charging stand 10.

Thus, since the user can set in advance whether to continue the execution of external charging, whether to operate air conditioning heater 224 and seat heater 226 can be determined according to the user's intention. Further, since the user is notified that air conditioning heater 224 and seat heater 226 are being activated when they are rendered conductive, the operation of the device can be started without causing any discomfort to the user. Although the present modification has described, by way of example, the case where charging left to its natural course is performed when ECU 100 determines that there is no setting to continue the execution of external charging, external charging may be stopped when it is determined that there is no setting to continue the execution of external charging, or external charging may be stopped when required current value Ia is determined to be less than minimum output current Imin.

Further, though the embodiment above has described that external charging is performed with air conditioning heater 224 and seat heater 226 rendered conductive when required current value Ia is less than minimum output current Imin, the user may be inquired about whether to allow the continuous execution of external charging with air conditioning heater 224 and seat heater 226 rendered conductive after connector 17 is attached to inlet 220.

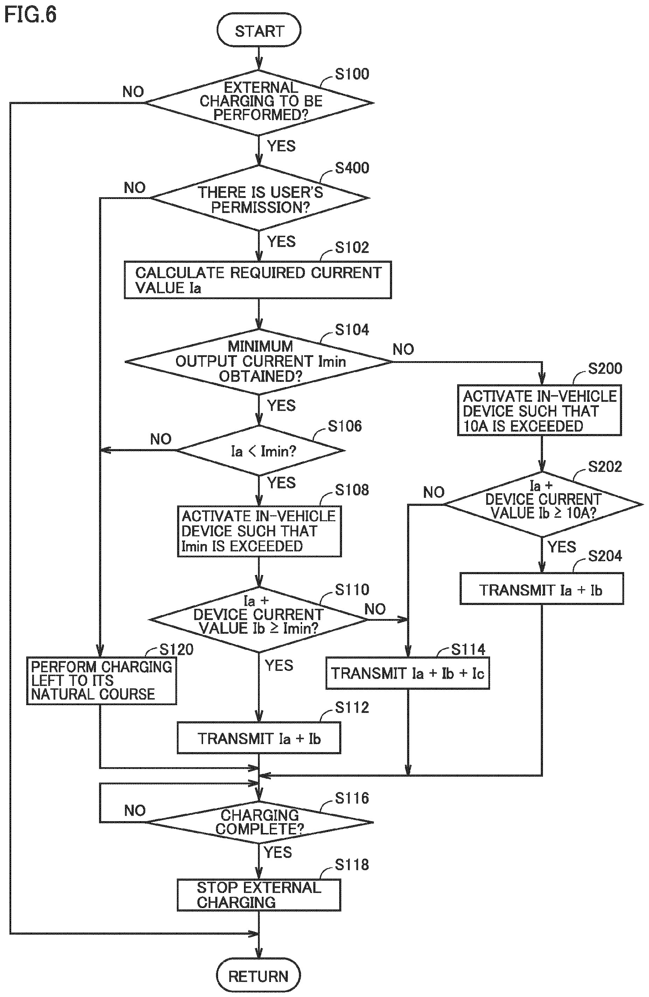

Fig. 6 is a third flowchart showing an example process performed by ECU 100 in a modification. The processes of S100, S102, S104, S106, S108, S110, S112, S114, S116, S118, S120, S200, S202, and S204 of the flowchart shown in Fig. 6 are identical to the processes of S100, S102, S104, S106, S108, S110, S112, S114, S116, S118, S120, S200, S202, and S204 of the flowchart shown in Fig. 4, respectively, except for the description below. Thus, detailed description thereof will not be repeated.

When ECU 100 determines that external charging is to be performed (YES in S100), the process moves to S400.

In S400, ECU 100 determines whether there is user's permission. For example, ECU 100 causes a display device provided in the compartment of vehicle 200 or a user terminal (e.g., a portable terminal such as a smart phone) capable of communicating with vehicle 200 to display a screen for accepting the selection operation whether to continue external charging while operating the devices such as air conditioning heater 224 and seat heater 226. When the user performs the selection operation, information about the accepted operation is transmitted to ECU 100. In the screen for accepting the selection operation, in addition to or instead of accepting the permission whether to continue external charging while operating the devices such as air conditioning heater 224 and seat heater 226, permission whether to increase the power consumption of such devices to continue external charging may be accepted in the screen for accepting the selection operation. ECU 100 determines whether there is user's permission using the information about the accepted operation. When ECU 100 determines that there is user's permission (YES in S400), the process moves to S102. When ECU 100 determines that there is no user's permission (NO in S400), the process moves to S120.

Thus, when external charging is to be performed by attaching connector 17 to inlet 220 (YES in S110), ECU 100 determines whether there is user's permission (S400). For example, a screen for inquiring whether to continue the execution of external charging while operating devices such as air conditioning heater 224 and seat heater 226 is displayed on a display device provided in the compartment of vehicle 200. When the user performs an operation to permit continuous execution of external charging, ECU 100 determines that there is user's permission (YES in S400), and ECU 100 calculates required current value Ia from the SOC of battery 214 and the like (S102). When minimum output current Imin is obtained (YES in S104) and when ECU 100 determines that required current value Ia is less than minimum output current Imin (YES in S106), ECU 100 renders air conditioning heater 224 and seat heater 226 conductive (S108).

When the sum of required current value Ia and device current value Ib is greater than or equal to minimum output current Imin (YES in S110), ECU 100 transmits the sum of required current value Ia and device current value Ib to charging stand 10 as the final required value (S112). As a result, a current corresponding to the required value is supplied to charging stand 10.

Thus, whether to start an operation of the device can be determined according to the user's intention. Although the modification above has described that it is determined whether there is user's permission to operate the devices or not, such as air conditioning heater 224 and seat heater 226, for example, it may also be determined whether there is user's permission to increase the power consumption of the device or not. Thus, whether to increase the power consumption of the device can be determined according to the user's intention.

Further, though the embodiment above has described that when required current value Ia is less than minimum output current Imin, external charging is to be performed with air conditioning heater 224 and seat heater 226 rendered conductive, the user may be inquired about whether to continue the execution of external charging when required current value Ia is less than minimum output current Imin.

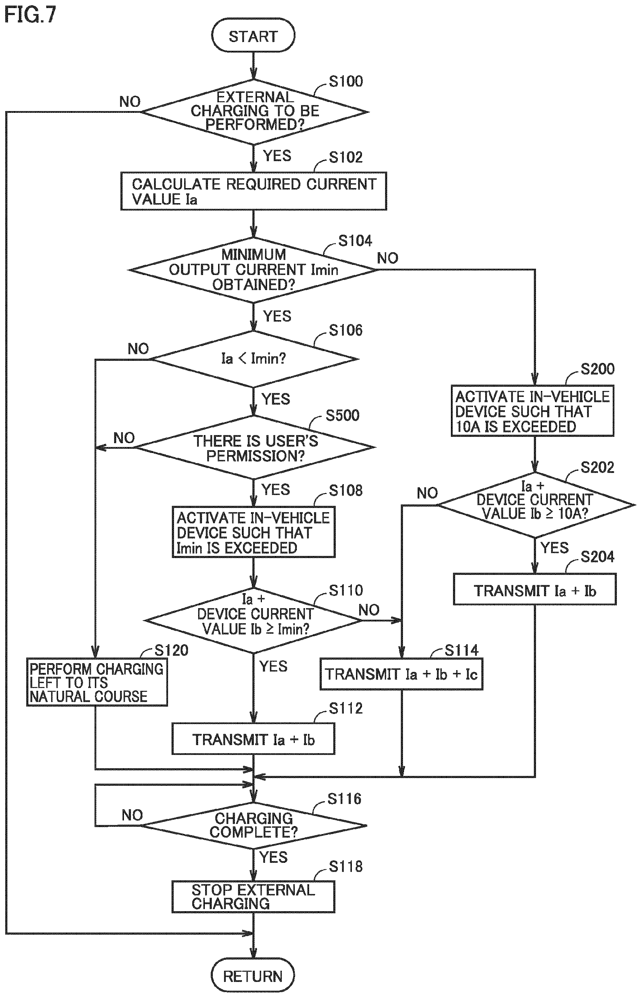

Fig. 7 is a fourth flowchart showing an example process performed by ECU 100 in a modification. The processes of S100, S102, S104, S106, S108, S110, S112, S114, S116, S118, S120, S200, S202, and S204 of the flowchart shown in Fig. 7 are identical to the processes of S100, S102, S104, S106, S108, S 110, S112, S114, S116, S118, S120, S200, S202, and S204 of the flowchart shown in Fig. 4, respectively, except for the description below. Thus, detailed description thereof will not be repeated.

When ECU 100 determines that required current value Ia is less than minimum output current Imin (YES in S106), the process moves to S500.

In S500, ECU 100 determines whether there is user's permission. The method of determining whether there is permission is the same as the process in S400 of Fig. 6. Thus, the detailed description thereof will not be repeated. When ECU 100 determines that there is user's permission (YES in S500), the process moves to S108. When ECU 100 determines that there is no user's permission (NO in S500), the process moves to S120.

Thus, when external charging is to be performed by attaching connector 17 to inlet 220 (YES in S110), ECU 100 calculates required current value Ia from the SOC of battery 214 and the like (S102). When minimum output current Imin is obtained (YES in S104) and when ECU 100 determines that required current value Ia is less than minimum output current Imin (YES in S106), ECU 100 determines whether there is user's permission (S500). For example, a screen for inquiring whether to continue the execution of external charging while operating devices such as air conditioning heater 224 and seat heater 226 is displayed on a display device provided in the compartment of vehicle 200. When the user performs an operation to permit the continuous execution of external charging, ECU 100 determines that there is user's permission (YES in S500) and renders air conditioning heater 224 and seat heater 226 conductive (S108).

When the sum of required current value Ia and device current value Ib is greater than or equal to minimum output current Imin (YES in S110), ECU 100 transmits the sum of required current value Ia and device current value Ib to charging stand 10 as the final required value (S112). As a result, a current according to the required value is supplied to charging stand 10. Thus, whether to start the operation of the device can be determined according to the user's intention.

Further, though the embodiment above has described that when the sum of required current value Ia and device current value Ib is less than minimum output current Imin even after increasing the power consumption, external charging is performed while activating any other device in addition to air conditioning heater 224 and seat heater 226, external charging may be stopped when battery 214 enters a predetermined state of charge before becoming fully charged.

Thus, an increase in load on battery 214 can be suppressed to protect battery 214.

In addition, the embodiment above has described that when the sum of required current value Ia and device current value Ib is less than minimum output current Imin, external charging is performed while activating any other device in addition to air conditioning heater 224 and seat heater 226. However, external charging may be performed while activating any other device in addition to air conditioning heater 224 and seat heater 226 when the sum of required current value Ia and device current value Ib is less than minimum output current Imin and when there is user's permission, and air conditioning heater 224, seat heater 226, and any other device may be brought to a halt when the sum of required current value Ia and device current value Ib is less than minimum output current Imin and when there is no user's permission.

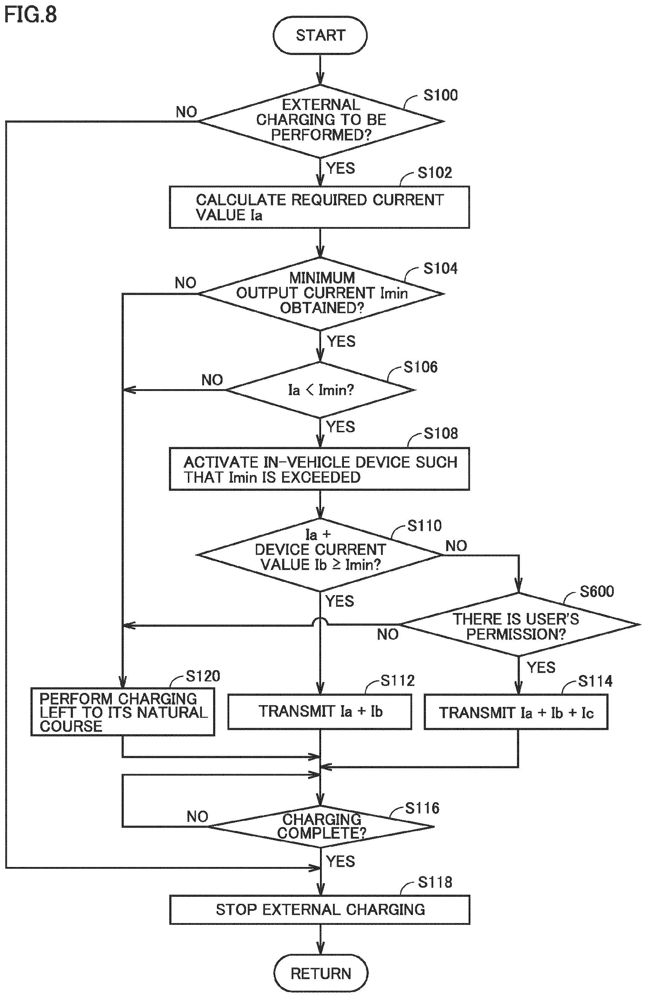

Fig. 8 is a fifth flowchart showing an example process performed by ECU 100 in a modification. The processes of S100, S102, S104, S106, S108, S110, S112, S114, S116, S118, and S120 of the flowchart shown in Fig. 8 are identical to the processes of S100, S102, S104, S106, S108, S110, S112, S114, S116, S118, and S120 of the flowchart shown in Fig. 2, respectively, except for the description below. Thus, detailed description thereof will not be repeated.

When the sum of required current value Ia and device current value Ib is less than minimum output current Imin (NO in S110), the process moves to S600.

In S600, ECU 100 determines whether there is user's permission. The method of determining whether there is permission is the same as the process in S400 of Fig. 6. Thus, detailed description thereof will not be repeated. When ECU 100 determines that there is user's permission (YES in S600), the process moves to S114. When ECU 100 determines that there is no user's permission (NO in S600), the process moves to S120.

Thus, when external charging is to be performed by attaching connector 17 to inlet 220 (YES in S110), ECU 100 calculates required current value Ia from the SOC of battery 214 and the like (S102). When minimum output current Imin is obtained (YES in S104) and ECU 100 determines that required current value Ia is less than minimum output current Imin (YES in S106), ECU 100 renders air conditioning heater 224 and seat heater 226 conductive (S108).

When the sum of required current value Ia and device current value Ib is greater than or equal to minimum output current Imin (YES in S110), ECU 100 transmits the sum of required current value Ia and device current value Ib to charging stand 10 as the final required value (S112). As a result, a current corresponding to the required value is supplied to charging stand 10.

Contrastingly, when the sum of required current value Ia and device current value Ib is less than minimum output current Imin (NO in 5110), ECU 100 determines whether there is user's permission (S600). For example, a screen for inquiring whether to continue the execution of external charging while operating devices such as air conditioning heater 224 and seat heater 226 is displayed on a display device provided in the compartment of vehicle 200. When the user performs an operation to permit the continuous execution of external charging, ECU 100 determines that there is user's permission (YES in S600) and transmits the sum of required current value Ia, device current value Ib, and current value Ic of a device other than air conditioning heater 224 and seat heater 226 to charging stand 10 as the final required value (S114). In this case, minimum output current Imin is supplied from charging stand 10. When determining that there is no user's permission (NO in S600), ECU 100 performs charging left to its natural course (S120). Thus, air conditioning heater 224, seat heater 226, and any other device are brought to a halt. This can reduce the power consumption by air conditioning heater 224 and seat heater 226. Thus, whether to start the operation of the device can be determined according to the user's intention. When ECU 100 determines that there is no user's permission, the process may move to S112. This brings any other device to a halt, so that the power consumption can be maintained.

The modifications described above may be entirely or partially combined as appropriate for implementation.

Although the embodiments of the present disclosure have been described, it should be understood that the embodiments disclosed herein are illustrative and non-restrictive in every respect. The scope of the present disclosure is defined by the terms of the claims and is intended to include any modifications within the scope and meaning equivalent to the terms of the claims.

## Claims

1. A vehicle (200) comprising:
a power storage device (214) configured to be charged with electric power supplied from a power supply (10) external to the vehicle (200);
a controller (100) configured to determine a required current value indicating a required value of a current supplied to the power storage device (214); and
a device (224, 226) configured to consume the electric power supplied to the power storage device (214),
wherein when a sum of the required current value and a device current value supplied to the device (224, 226) is less than a threshold, the controller (100) increases power consumption in the device (224, 226).

2. The vehicle (200) according to claim 1, wherein the threshold is a lower limit of a current output from the power supply (10) external to the vehicle (200).

3. The vehicle (200) according to claim 1, wherein the threshold is an actually measured value of a lower limit of a current output from the power supply (10) external to the vehicle (200).

4. The vehicle (200) according to any of claims 1 to 3, wherein when the sum of the required current value and the device current value is less than the threshold, the controller (100) increases the power consumption such that the sum of the required current value and the device current value is greater than or equal to the threshold.

5. The vehicle (200) according to any of claims 1 to 4, further comprising a notification device configured to notify a user of predetermined information,
wherein when the sum of the required current value and the device current value is less than the threshold, the controller (100) uses the notification device to notify the user that an operation of the device (224, 226) is to be started.

6. The vehicle (200) according to any of claims 1 to 4, further comprising a notification device configured to notify a user of predetermined information,
wherein when the sum of the required current value and the device current value is less than the threshold, the controller (100) uses the notification device to notify the user that the power consumption is to be increased.

7. The vehicle (200) according to any of claims 1 to 6, further comprising an input device configured to accept an operation from a user,
wherein the controller (100) is configured to
start an operation of the device (224, 226) when the sum of the required current value and the device current value is less than the threshold and when a fist operation has been accepted in the input device, the first operation indicating that starting the operation of the device (224, 226) is permitted, and
bring the device (224, 226) to a halt when the sum of the required current value and the device current value is less than the threshold and when a second operation has been accepted in the input device, the second operation indicating that starting the operation of the device (224, 226) is not permitted.

8. The vehicle (200) according to any of claims 1 to 6, further comprising an input device configured to accept an operation from a user,
wherein the controller (100) is configured to
increase the power consumption when the sum of the required current value and the device current value is less than the threshold and when a first operation has been accepted in the input device, the first operation indicating that an increase in the power consumption is permitted, and
maintain or reduce the power consumption when the sum of the required current value and the device current value is less than the threshold and when a second operation has been accepted in the input device, the second operation indicating that an increase in the power consumption is not permitted.

9. The vehicle (200) according to any of claims 1 to 8, wherein when the sum of the required current value and the device current value is less than the threshold after increasing the power consumption, the controller (100) stops supply of the electric power from the power supply (10) external to the vehicle (200) before the power storage device (214) is fully charged.
